# EUROPEAN PATENT APPLICATION

(11) **EP 4 171 130 A1**
(43) Date of publication of application: **26.04.2023**
(21) Application number: 21829828.9
(22) Date of filing: 29.04.2021
(51) Int. Cl.: H04W 48/16, H04W 48/20

(54) **CELL RESIDING PROCESSING METHOD, TERMINAL DEVICE, AND COMPUTER READABLE STORAGE MEDIUM**

(30) Priority: 23.06.2020 CN 202010581227
(71) Applicant: GUANGDONG OPPO MOBILE TELECOMMUNICATIONS CORP., LTD., Dongguan, Guangdong 523860 (CN)
(72) Inventor: ZHANG, Zhenyu, Dongguan, Guangdong 523860 (CN)
(74) Representative: Ipside
(86) International application number: PCT/CN2021/091006
(87) International publication number: WO 2021/258852

(57) **Abstract**

A cell residing processing method, a terminal device (100), and a computer readable storage medium. The cell residing processing method is used in a terminal device (100) in a non-standalone networking mode. The processing method comprises: when a terminal device (100) is in a non-roaming state and enters an idle state, acquiring an LTE cell list (S20); if a first ENDC cell is in the LTE cell list, selecting the first ENDC cell for residing (S40); and if a first ENDC cell is not in the LTE cell list, selecting a second ENDC cell for residing (S60); the first ENDC cell is an ENDC cell in the LTE cell list and the first ENDC cell is in a list of neighboring cells of the serving cell in which the terminal device is located; the second ENDC cell is an ENDC cell in the LTE cell list and the second ENDC cell is not in the list of neighboring cells of the serving cell in which the terminal device (100) is located.

## Description

### PRIORITY INFORMATION

The present application claims priority of Chinese Patent Application No. 202010581227.5, filed on June 23, 2020, in the China National Intellectual Property Administration, the entire contents of which are hereby incorporated by reference in its entirety.

### TECHNICAL FIELD

The present disclosure relates to the field of communication technologies, and in particular to a processing method for cell residing, a terminal device, and a computer-readable storage medium.

### BACKGROUND

In the related art, in the E-UTRA NR Dual Connectivity with E-UTRAN connected to EPC (ENDC) mode, if user equipment (UE) resides in a long term evolution (LTE) cell that does not support the ENDC combination of LTE and 5G, the UE cannot reside on the 5G network.

Currently, after the UE supporting ENDC enters an idle state from a connected state, regardless of 2G, 3G or 4G, a conventional method is to reselect to an LTE cell that meets a reselection threshold based on reselection information configured by the network in the system message. If there are multiple LTE cells, the UE cannot be guaranteed to reside on an LTE cell supporting ENDC, resulting in the UE supports ENDC but cannot use 5G. In addition, if there is an LTE cell that supports ENDC, but the LTE cell is not in the neighborhood list of the current resident cell, UE cannot reside on the 5G cell.

### SUMMARY OF THE DISCLOSURE

The present disclosure provides a processing method for cell residing, a terminal device, and a computer-readable storage medium.

A processing method for cell residing, applied to a terminal device in a non-independent networking mode; wherein the processing method comprises:
obtaining a long term evolution (LTE) cell list in response to the terminal device being in a non-roaming state and entering an idle state;
selecting a first EUTRA-NR dual connection (ENDC) cell to reside on in response to the first ENDC cell existing in the LTE cell list; and
selecting a second ENDC cell to reside on in response to the first ENDC cell not existing in the LTE cell list;
wherein the first ENDC cell is an ENDC cell in the LTE cell list, and the first ENDC cell is in a neighbor list of a serving cell where the terminal device is located;
the second ENDC cell is an ENDC cell in the LTE cell list, and the second ENDC cell is not in the neighbor list of the serving cell where the terminal device is located.

A terminal device, configured to operate in a non-independent networking mode; wherein the terminal device comprises a processor configured to perform: obtaining a long term evolution (LTE) cell list in response to the terminal device being in a non-roaming state and entering an idle state; selecting a first EUTRA-NR dual connection (ENDC) cell to reside on in response to the first ENDC cell existing in the LTE cell list; and selecting a second ENDC cell to reside on in response to the first ENDC cell not existing in the LTE cell list; wherein the first ENDC cell is an ENDC cell in the LTE cell list, and the first ENDC cell is in a neighbor list of a serving cell where the terminal device is located; the second ENDC cell is an ENDC cell in the LTE cell list, and the second ENDC cell is not in the neighbor list of the serving cell where the terminal device is located.

A terminal device, comprising an application processor, a memory, and one or more programs; wherein the one or more programs are stored in the memory and configured to be executed by the application processor; the one or more programs comprise instructions for performing the method as above.

A computer-readable storage medium, storing a computer program; wherein the computer program comprises a program instruction, the program instruction when executed by a processor causing the processor to perform the method as above.

In the processing method for cell residing, terminal device, and computer-readable storage medium proposed by the present disclosure, when the first ENDC cell exists in the LTE cell list, the first ENDC cell is selected for residency, and when the first ENDC cell does not exist in the LTE cell list, the second ENDC cell is selected for residency, which improves the success rate of registering the NSA-enabled terminal device on the 5G network and enables the terminal device to use the 5G network.

Additional aspects and advantages of the embodiments of the present disclosure will be given in part in the following description, and will become apparent in part from the following description, or through the practice of the present disclosure.

### BRIEF DESCRIPTION OF THE DRAWINGS

The above and/or additional aspects and advantages of the present disclosure will become apparent and readily understood from the following description of embodiments in conjunction with the accompanying drawings.
FIG. 1 is a flowchart of a processing method for cell residing according to an embodiment of the present disclosure.
FIG. 2 is a structural schematic view of a terminal device according to an embodiment of the present disclosure.
FIG. 3 is a flowchart of a processing method for cell residing according to another embodiment of the present disclosure.
FIG. 4 is a structural schematic view of a terminal device according to another embodiment of the present disclosure.
FIG. 5 is a flowchart of a processing method for cell residing according to further another embodiment of the present disclosure.
FIG. 6 is a flowchart of a processing method for cell residing according to further another embodiment of the present disclosure.
FIG. 7 is a flowchart of a processing method for cell residing according to further another embodiment of the present disclosure.
FIG. 8 is a schematic view of an interaction between a computer-readable storage medium and a terminal device according to an embodiment of the present disclosure.

### DETAILED DESCRIPTION

The technical solutions in the embodiments of the present disclosure will be described below with reference to the accompanying drawings in the embodiments of the present disclosure. Obviously, the described embodiments are part of the embodiments of the present disclosure, rather than all of the embodiments. With regard to the embodiments in the present disclosure, all other embodiments obtained by those skilled in the art without creative efforts shall fall within the scope of the present disclosure.

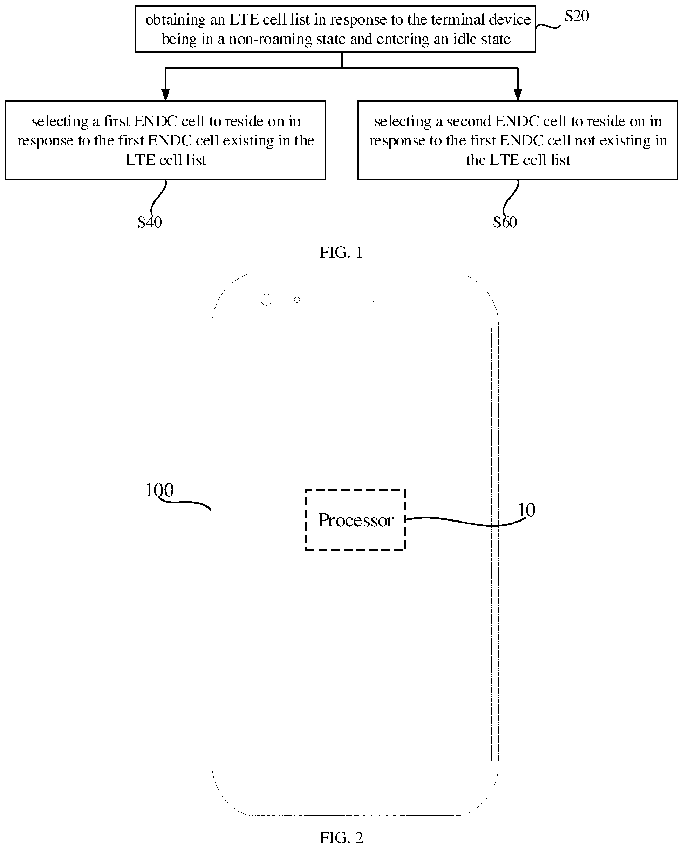

Referring to FIG. 1, embodiments of the present disclosure provide a processing method for cell residing. The processing method for cell residing is applied to a terminal device 100 in a non-independent networking mode. The method includes operations at blocks illustrated herein.

At block S20: obtaining a long term evolution (LTE) cell list in response to the terminal device 100 being in a non-roaming state and entering an idle state.

At block S40: selecting a first EUTRA-NR dual connection (ENDC) cell to reside on in response to the first ENDC cell existing in the LTE cell list.

At block S60: selecting a second ENDC cell to reside on in response to the first ENDC cell not existing in the LTE cell list.

Referring to FIG. 2, embodiments of the present disclosure further provide a terminal device 100. The processing method for cell residing in the embodiments of the present disclosure may be implemented by the terminal device 100 herein. The terminal device 100 includes a processor 10, and the steps S20, S40 and S60 can be implemented by the processor 10. That is, the processor 10 is configured to obtain a long term evolution (LTE) cell list in response to the terminal device 100 being in a non-roaming state and entering an idle state. The processor 10 is configured to select a first EUTRA-NR Dual Connection (ENDC) cell to reside on in response to the first ENDC cell existing in the LTE cell list. The processor 10 is configured to select a second ENDC cell to reside on in response to the first ENDC cell not existing in the LTE cell list.

In the embodiments of the present disclosure, the first ENDC cell is an ENDC cell in the LTE cell list, and the first ENDC cell is in a neighbor list of a serving cell where the terminal device 100 is located. The second ENDC cell is an ENDC cell in the LTE cell list, and the second ENDC cell is not in the neighbor list of the serving cell where the terminal device 100 is located.

In the processing method for cell residing and the terminal device 100 in the above embodiments, when the first ENDC cell exists in the LTE cell list, the first ENDC cell is selected for residing, and when the LTE cell list does not exist in the first ENDC cell, the second ENDC cell is selected for residing, which may improve the success rate of the terminal device 100 supporting NSA to register on the 5G network, such that the terminal device 100 can use the 5G network.

Specifically, in the embodiments of the present disclosure, the terminal device 100 includes but is not limited to user equipment (UE), access terminal, user unit, user station, mobile station, mobile platform, remote station, remote terminal, mobile device, user terminal, terminal, wireless communication device, user agent, or user apparatus, etc. The terminal may be a station (STAION, ST) in a WLAN, a cellular phone, a cordless phone, a session initiation protocol (SIP) phone, a wireless local loop (WLL) station, a personal digital processor (PDA) device, a handheld device with wireless communication capabilities, a computing device, or other processing devices connected to wireless modems, an in-vehicle device, a wearable device, and next-generation communication systems such as a terminal in NR networks or a terminal in future evolved public land mobile network (PLMN) networks, etc.

In the embodiments of the present disclosure, the non-standalone (NSA) networking method is the 4th generation mobile communication technology (4G) independently deployed control plane (4G carrying control signaling), 5G and 4G jointly deployed user plane (5G and 4G carrying user plane data), or 5G independently deployed user plane (only 5G carrying user plane data).

In the embodiments of the present disclosure, the non-roaming state can be understood that the public land mobile network (PLMN) of the serving cell where the terminal device 100 currently resides on is home public land mobile network (HPLMN) or equivalent home PLMN (EHPLMN).

In the embodiments of the present disclosure, the terminal device 100 has two operating states, namely a connected state and an idle state. The connected state can be understood as that the terminal device 100 can perform data services, such as web browsing and other services. The idle state can be understood as an Idle state. In the idle state, all data connections of the terminal device 100 are closed at the access layer, that is, the terminal device 100 does not perform services such as data transmission.

In the embodiments of the present disclosure, the LTE is a standard of the 4G wireless broadband technology. In an LTE system, there may be multiple LTE cells in one base station, and each LTE cell has a different cell ID.

When the terminal device 100 is in the non-roaming state and enters the idle state, the LTE cell list is obtained. It can be understood that the serving cell that the terminal device 100 currently resides on is HPLMN or EHPLMN, and the terminal device 100 obtains the LTE cell list without data transmission.

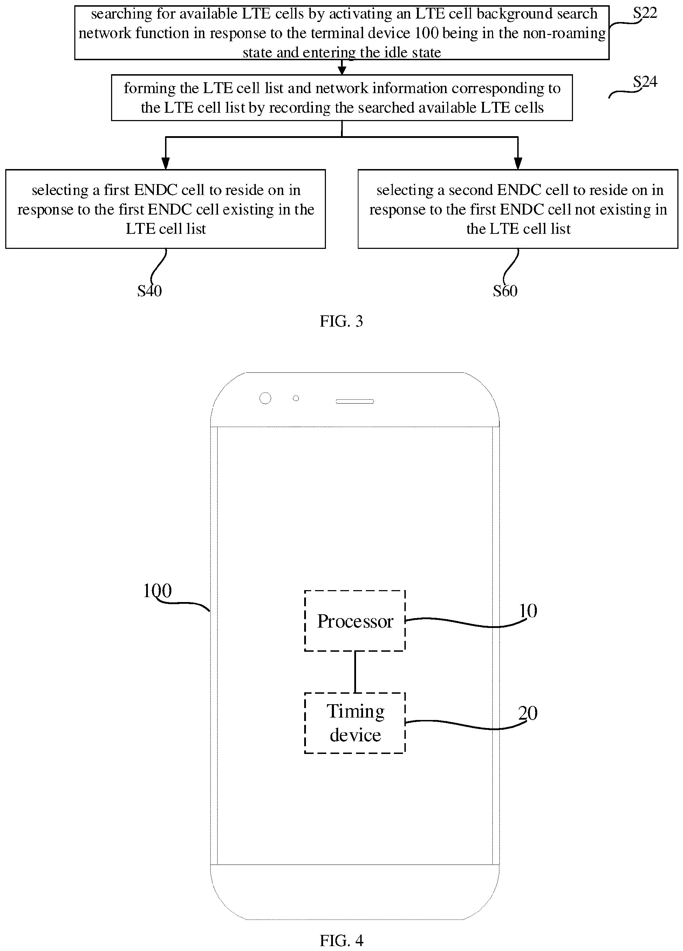

Referring to FIG. 3, in some embodiments of the present disclosure, step S20 may includes operations at blocks illustrated herein.

At block S22: searching for available LTE cells by activating an LTE cell background search network function in response to the terminal device 100 being in the non-roaming state and entering the idle state.

At block S24: forming the LTE cell list and network information corresponding to the LTE cell list by recording the searched available LTE cells.

The processing method in the above embodiments may be implemented by the terminal device 100 herein. That is, both step S22 and step S24 can be implemented by the processor 10. That is, the processor 10 is configured to search for available LTE cells by activating an LTE cell background search network function in response to the terminal device 100 being in the non-roaming state and entering the idle state; and form the LTE cell list and network information corresponding to the LTE cell list by recording the available LTE cells. The network information is configured to determine whether the first ENDC cell or the second ENDC cell exists in the LTE cell list.

In this way, the LTE cell list and the network information corresponding to the LTE cell list may be quickly and accurately obtained.

Specifically, the terminal device 100 in the non-roaming state may be understood that the terminal device 100 is in the home cell. The available LTE cells may be understood as LTE cells that can be directly searched through the background search network.

The network information includes but is not limited to the PLMN of the LTE cell, the frequency of the LTE cell, the ID of the LTE cell, and whether an upperLayerIndication-r15 field is included in the SIB2.

The upperLayerIndication-r15 field is a field extended by the LTE cell in the form of NSA networking, and is configured to indicate whether the cell is an NSA cell supporting 5G. When the terminal device 100 parses the upperLayerIndication-r15 from SIB2, the LTE cell is an ENDC cell. An ENDC cell can be understood as a cell that can access both LTE and 5G at the same time.

In addition, in the present disclosure, the processor 10 may determine whether the LTE cell is in the neighbor list of the serving cell where the terminal device 100 is located according to the PLMN of the LTE cell, the frequency of the LTE cell, and the ID of the LTE cell, so as to determine whether the first ENDC cell or the second ENDC cell exists in the LTE cell list.

In the embodiments of the present disclosure, the first ENDC cell may be understood as a cell capable of accessing LTE and 5G at the same time, and the first ENDC cell is in the neighbor list of the serving cell where the terminal device 100 is located. The second ENDC cell may be understood as a cell capable of accessing LTE and 5G at the same time, and the second ENDC cell is not in the neighbor list of the serving cell where the terminal device 100 is located.

In some embodiments, when the terminal device 100 enters the idle state from the connected state, and the cell where the terminal device 100 currently resides on is the home cell (non-roaming state), the LTE cell background search function (LTE available cell) is activated to search for available LTE cells near the terminal device 100, and the found LTE cells are recorded to form the LTE cell list. The network information corresponding to the LTE cell list includes the PLMN of the LTE cell, the frequency of the LTE cell, the ID of the LTE cell, and whether the SIB2 includes the upperLayerIndication-r15 field. The processor 10 determines whether the first ENDC cell or the second ENDC cell exists in the LTE cell list according to the network information.

Referring to FIG. 4, in some embodiments of the present disclosure, the terminal device 100 includes a timing device 20, and the processing method include operations as follows.

Activating the timing device 20 in response to the terminal device 100 being in a roaming state; and determining whether the terminal device 100 is in the non-roaming state after the timing device 20 exceeds a preset timing period.

The processing method in the above embodiments may be implemented by the processor 10 herein. That is, the processor 10 is configured to activate the timing device 20 in response to the terminal device 100 being in a roaming state, and whether the terminal device 100 is in the non-roaming state after the timing device 20 exceeds a preset timing period. In this way, the state of the terminal device 100 may be tracked regularly.

In some embodiments of the present disclosure, the processing method may include operations as followed.

Activating the timing device 20 after completely executing the LTE cell background network search function; and activating the LTE cell background network search function again after the timing device 20 exceeds the preset timing period.

The processing method in the above embodiments may be implemented by the processor 10 herein. That is, the processor 10 is configured to activate the timing device 20 after completely executing the LTE cell background network search function, and activate the LTE cell background network search function again after the timing device 20 exceeds the preset timing period. In this way, the terminal device 100 is prepared for activating the LTE cell background network search function when the terminal device 100 enters the idle state again, and the state of the terminal device 100 is tracked regularly.

Specifically, the timing device 20 includes but is not limited to a timer. In some embodiments, the timing device 20 is a timer A of the LTE cell background search function. When the terminal device 100 resides on a non-home cell (roaming state), the timer A is activated. For example, the preset timing period is t seconds, and after t seconds, it is determined whether the terminal device 100 is still resided on the non-home cell (roaming state). When the terminal device 100 is still residing on the non-home cell (roaming state), the timer A is activated again. When the terminal device 100 has been resided on a non-home cell (non-roaming state), the LTE cell background network search function is activated, and the LTE cells are searched for. After the LTE cell background network search function is executed, the timer A is activated, and after the timer A exceeds the preset time period, the LTE cell background search function is activated again, and the above cycle is repeated.

In other embodiments, the timing device 20 is a timer A of the LTE cell background network search function. When the terminal device 100 resides on the home cell (non-roaming state), the timer A is activated. For example, the preset timing period is t seconds, and after t seconds, the LTE cell background search function is activated to search for LTE cells to form the LTE cell list. After the search is completed, the timer A is activated again to prepare for the next start of the LTE cell background search function.

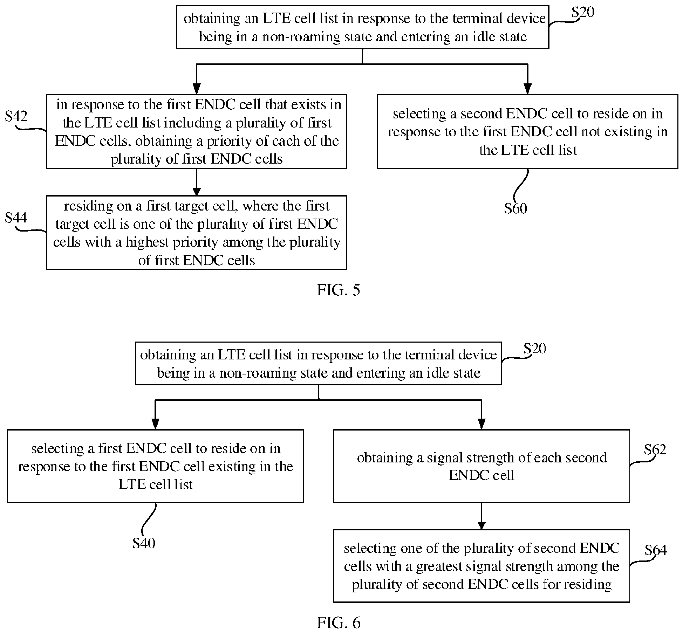

Referring to FIG. 5, in some embodiments of the present disclosure, step S40 may include operations at blocks illustrated herein.

At block S42: in response to the first ENDC cell that exists in the LTE cell list including a plurality of first ENDC cells, obtaining a priority of each of the plurality of first ENDC cells.

At block S44: residing on a first target cell, where the first target cell is one of the plurality of first ENDC cells with a highest priority among the plurality of first ENDC cells.

The processing method in the above embodiments may be implemented by the terminal device 100 herein. Step S42 and S44 may be implemented by the processor 10. That is, the processor 10 is configured to, in response to the first ENDC cell that exists in the LTE cell list including a plurality of first ENDC cells, obtain a priority of each of the plurality of first ENDC cells; and reside on a first target cell, where the first target cell is one of the plurality of first ENDC cells with a highest priority among the plurality of first ENDC cells. In this way, the terminal device 100 may quickly reside on the qualified first target cell, such that the terminal device 100 may quickly use the 5G network.

Specifically, in the embodiments of the present disclosure, the processor 10 may determine, according to network information corresponding to each LTE cell in the LTE cell list, whether an ENDC cell exists in the LTE cell list and whether the ENDC cell is in the neighbor list of the serving cell where the terminal device 100 is located. When an ENDC cell exists in the LTE cell list and the ENDC cell is in the neighbor list of the serving cell where the terminal device 100 is located, it may be indicated that the first ENDC cell exists in the LTE cell list. In the embodiments of the present disclosure, when multiple first ENDC cells exist in the LTE cell list, the first ENDC cell with the highest priority among the first ENDC cells is selected for residing.

In other embodiments, when there are multiple first ENDC cells in the LTE cell list, the priority of the multiple first ENDC cells may be increased synchronously according to a preset rule, such that the terminal device 100 may more easily reside on the first ENDC cell, thereby quickly using the 5G network.

In some embodiments, the preset rule may be: adjusting the first ENDC cell with the highest priority among the first ENDC cells in the neighbor list to the highest, for example, 7; and calculating a priority magnitude value corresponding to the ENDC cell, and adjusting the remaining first ENDC cells in the neighbor cell list according to the priority magnitude value. For example, the priority of the current serving cell of the terminal device 100 is 6, assuming that the number of ENDC cells in the neighbor list is 3, which are A, B, and C, respectively, the priority of A is 6, the priority of B is 5, and the priority of C is 4, and the highest priority is 7, then according to the preset rule, the priority of A is adjusted from 6 to 7, the priority of B is adjusted from 5 to 6, and the priority of C is adjusted from 4 to 5.

In some embodiment of the present disclosure, the processing method includes operations as follows.

In response to the first target cell including a plurality of first target cells, selecting one of the plurality of first target cells with a greatest signal strength among the plurality of first target cells for residing.

The processing method in the above embodiments may be implemented by the processor 10. The processor 10 is configured to, in response to the first target cell including a plurality of first target cells, select one of the plurality of first target cells with a greatest signal strength among the plurality of first target cells for residing. In this way, it may be ensured that the terminal device 100 can quickly select a better first ENDC cell for cell residing.

Specifically, in the case where there are multiple first target cells, that is, the multiple first target cells are all eligible to access the 5G network, then one first target cell with the strongest strength among the multiple first target cells may be used for cell residing, which may improve the probability that the terminal device 100 quickly accesses the 5G network.

In some embodiments, when the priority of the current serving cell of the terminal device 100 is 6, assuming that the number of first ENDC cells in the list of the terminal device 100 is 3, which are A, B, and C, respectively, the priority of A is 6, the priority of B is 6, and the priority of C is 5. The terminal device 100 may increase the priority of A and B to 7, and increase the priority of C to 6. In this case, the priority of cell A and cell B are the same, that is, there are two first target cells. The terminal device 100 may further obtain the signal strengths of cell A and cell B respectively, and select a cell with the strongest signal strength among cell A and cell B to reside on. It should be noted that, when the terminal device 100 cannot connect to the cell A and the cell B, the cell C is selected for residing.

Referring to FIG. 6, in some embodiments of the present disclosure, step S60 includes operations at blocks illustrated herein.

At block S62: obtaining a signal strength of each second ENDC cell.

At block S64: selecting one of the plurality of second ENDC cells with a greatest signal strength among the plurality of second ENDC cells for residing.

The processing method in the above embodiments may be implemented by the terminal device 100 herein. Steps S62 and S64 may be implemented by the processor 10. That is, the processor 10 is configured to obtain a signal strength of each second ENDC cell, and select one of the plurality of second ENDC cells with a greatest signal strength among the plurality of second ENDC cells for residing. In this way, in the presence of the second ENDC cell, although the second ENDC cell is not in the neighbor list of the terminal device 100, the terminal device 100 may still reside on cells with ENDC function, such that the terminal device 100 can reside on 5G network.

In some embodiments, the terminal device 100 activates the LTE cell background search function, and searches for multiple LTE cells. The LTE cell list includes cell A, cell B, cell C, cell D, and cell E. Among them, cell A, cell B, and cell C are in the neighbor cell list of the terminal device 100, and cell D and cell E are ENDC cells but not in the neighbor cell list of the terminal device 100. In a case where the processor 10 determines that the cell D and the cell E belong to the ENDC cell and are not in the neighbor list of the terminal device 100, that is, the cell D and the cell E are the second ENDC cells, the processor 10 may obtain the signal strengths of cell D and cell E respectively, compare the signal strengths of cell D and cell E, and select the cell among the cell D and cell E with the greatest signal strength for cell residing according to the comparison result.

In some embodiments of the present disclosure, the processing method includes operations as follows.

Controlling the terminal device 100 to enter a 3GPP reselection process in response to the first ENDC cell and the second ENDC cell not existing in the LTE cell list.

The processing method in the above embodiments may be implemented by the processor 10. That is, the processor 10 is configured to control the terminal device 100 to enter a 3GPP reselection process in response to the first ENDC cell and the second ENDC cell not existing in the LTE cell list. In this way, it may be ensured that the terminal device 100 can normally connect to the network.

Specifically, the 3GPP reselection process may be understood as a process of selecting a best cell to provide service signals by monitoring the signal quality of the neighboring cell of the terminal device 100 and the signal quality of the current serving cell, when the terminal device 100 is in the idle state.

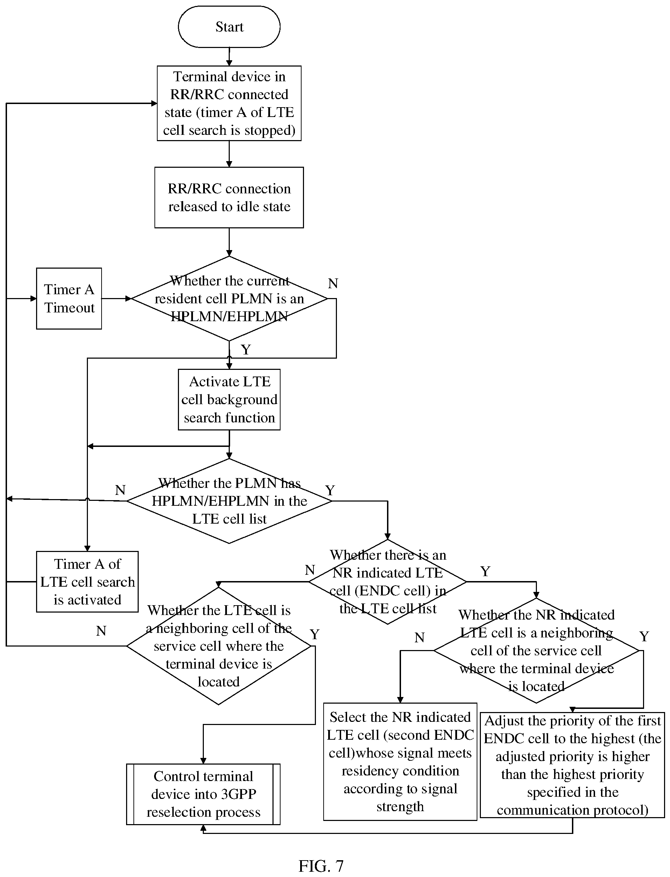

In summary, referring to FIG. 7, the following expands on a specific embodiment.

The terminal device 100 is powered on and resides on cell A (cell A may be a 2G, 3G, or 4G cell), and at this time the terminal device 100 is in a RR/RRC connection state and can perform data services, such as browsing web pages. When the user stops using data (or the data switch is turned off), after a preset time period, the network will release the RRC/RR connection, such that the terminal device 100 enters an idle state. At this time, the terminal device 100 will judge whether the PLMN of the currently resided cell is HPLMN or EHPLMN.

When the PLMN of the cell currently resided on is not HPLMN or EHPLMN, it means that the cell currently resided on by the terminal device 100 is not a home cell. When the cell where the terminal device 100 currently resides on is not the home cell, the timer A for LTE cell search is activated, and the terminal device 100 stays in the idle state. After the timer A exceeds the preset timing period, it is re-determined whether the PLMN of the currently resided cell is HPLMN or EHPLMN.

When the PLMN of the cell currently resided on is HPLMN or EHPLMN, it means that the cell currently resided on by the terminal device 100 is the home cell. When the cell where the terminal device 100 currently resides on is the home cell, the LTE cell background network search function is activated to perform an LTE cell search. After the network search function is completely executed, the timer A for LTE cell search is activated again.

Then, the terminal device 100 forms the LTE cell list according to the search result, and the terminal device 100 determines whether there is HPLMN or EHPLMN in the LTE cell list.

When there is no HPLMN cell or EHPLMN cell in the LTE cell list (except the current serving cell of the terminal device 100), after the timer A expires, it is re-determined whether the PLMN of the currently resided cell is HPLMN or EHPLMN.

When there is HPLMN cell or EHPLMN cell in the LTE cell list, it is determined whether there is an LTE cell (ENDC cell) indicated by NR in the LTE cell list.

When there is an LTE cell (ENDC cell) indicated by NR in the LTE cell list, it is determined whether the LTE cell (ENDC cell) indicated by NR is a neighboring cell of the serving cell where the terminal device 100 is located. When the LTE cell (ENDC cell) indicated by the NR is a neighboring cell of the serving cell where the terminal device 100 is located, that is, the first ENDC cell exists in the LTE cell list, the priority of the first ENDC cell is adjusted to the highest (the adjusted priority is higher than the highest priority specified by the communication protocol). When the LTE cell (ENDC cell) indicated by the NR is not a neighboring cell of the serving cell where the terminal device 100 is located, that is, the first ENDC cell does not exist in the LTE cell list, the LTE cell (the second ENDC cell) indicated by the NR with signals satisfy a residing condition is selected according to the signal strength.

When there is no LTE cell (ENDC cell) indicated by NR in the LTE cell list, it is determined whether the LTE cell is a neighboring cell of the serving cell where the terminal device 100 is located. When the LTE cell is a neighboring cell of the serving cell where the terminal device 100 is located, the terminal device 100 is controlled to enter the 3GPP reselection process. When the LTE cell is not a neighboring cell of the serving cell where the terminal device 100 is located, after the timer A exceeds the preset timing period, it is continued to determine whether the PLMN of the currently resided cell is HPLMN or EHPLMN.

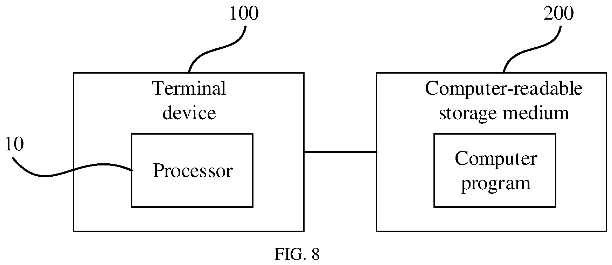

Referring to FIG. 8, embodiments of the present disclosure further provide a computer-readable storage medium 200. The computer-readable storage medium 200 may be connected with the terminal device 100 of the present disclosure. The computer-readable storage medium 200 stores a computer program. When the computer program is executed by the processor 10, the processing method of any one of the above-mentioned embodiments is implemented.

For example, referring to FIG. 1, when the computer program is executed by the processor 10, the following steps are implemented.

At block S20: obtaining a long term evolution (LTE) cell list in response to the terminal device 100 being in a non-roaming state and entering an idle state.

At block S40: selecting a first EUTRA-NR Dual Connection (ENDC) cell to reside on in response to the first ENDC cell existing in the LTE cell list.

At block S60: selecting a second ENDC cell to reside on in response to the first ENDC cell not existing in the LTE cell list.

The first ENDC cell is an ENDC cell in the LTE cell list, and the first ENDC cell is in a neighbor list of a serving cell where the terminal device 100 is located. The second ENDC cell is an ENDC cell in the LTE cell list, and the second ENDC cell is not in the neighbor list of the serving cell where the terminal device 100 is located.

In the computer-readable storage medium 200 of the above embodiments, when the first ENDC cell exists in the LTE cell list, the first ENDC cell is selected for residing, and when the LTE cell list does not exist in the first ENDC cell, the second ENDC cell is selected for residing, which may improve the success rate of the terminal device 100 supporting NSA to register on the 5G network, such that the terminal device 100 can use the 5G network.

It should be understood that the processor 10 in the embodiments of the present disclosure may be an integrated circuit chip with processing capabilities for signals. In implementation, the steps of the above method embodiments may be accomplished by integrated logic circuitry in hardware in the processor 10 or by instructions in the form of software. The processor 10 above may be a general-purpose processor, a digital signal processor (DSP), an application specific integrated circuit (ASIC), a field programmable gate array (FPGA) or other programmable logic device, discrete gate or transistor logic device, or discrete hardware component. The methods, steps, and logical block diagrams in each embodiment of the present disclosure may be implemented or performed. The general-purpose processor may be a microprocessor or may be any conventional processor, etc. The steps of the method disclosed in conjunction with the embodiments of the present disclosure may be directly embodied as performed by the hardware decoding processor or performed with a combination of hardware and software modules in the decoding processor. The software module may be located in random memory, flash memory, read-only memory, programmable read-only memory or electrically rewritable programmable memory, registers, and other storage media well established in the art. The storage medium is located in the memory and the processor 10 can read the information in the memory, for completing the steps of the above methods in combination with its hardware.

The computer program may be applied to the terminal device 100 in the embodiments of the present disclosure, and when the computer program runs on the computer, the computer executes the corresponding processes implemented by the terminal device 100 in each method of the embodiments of the present disclosure. For brevity, details are not repeated herein.

Those skilled in the art can realize that the units and algorithm steps of each example described in conjunction with the embodiments disclosed herein may be implemented in electronic hardware, or a combination of computer software and electronic hardware. Whether these functions are performed in hardware or software depends on the specific application and design constraints of the technical solution. Those skilled in the art may implement the described functionality using different methods for each particular application, but such implementations should not be considered beyond the scope of the present disclosure.

Those skilled in the art can clearly understand that, for the convenience and brevity of description, the specific working process of the above-described systems, devices and units may refer to the corresponding processes in the foregoing method embodiments, which will not be repeated here.

In the several embodiments provided in the present disclosure, it should be understood that the disclosed systems, devices and methods may be implemented in other ways. For example, the device embodiments described above are merely schematic, e.g., the division of units, which is only a logical functional division, may be divided in another way when actually implemented, e.g., multiple units or components may be combined or be integrated into another system, or some features may be ignored, or not implemented. Further, the mutual coupling or direct coupling or communication connections shown or discussed may be indirect coupling or communication connections through some interface, device or unit, which may be electrical, mechanical or other forms.

The units illustrated as separate components may or may not be physically separated, and the components displayed as units may or may not be physical units, i.e., they may be located in one place, or they may be distributed to multiple network units. Some or all of these units may be selected according to practical needs to achieve the purpose of the solution in the embodiments.

In addition, each functional unit in each embodiment of the present disclosure may be integrated into one processing unit, or each unit may exist physically alone, or two or more units may be integrated into one unit.

The functionality, when implemented in the form of a software functional unit and sold or used as a separate product, may be stored in a computer-readable storage medium. It is understood that the technical solution of the present disclosure, or the part of the technical solution that essentially contributes to the prior art, may be embodied in the form of a software product that is stored in a storage medium and includes a number of instructions to enable a computer device (which may be a personal computer, server, or network device, etc.) to perform all or part of the steps of the method of each embodiment of the present disclosure. The storage medium includes: USB flash drive, removable hard disk, read-only memory (ROM), random access memory (RAM), disk or CD-ROM, and other media that can store program code.

The above are only specific embodiments of the present disclosure, but the scope of the present disclosure is not limited to this. Those skilled in the art can easily think of changes or replacements within the technical scope disclosed in the present disclosure, and should cover within the scope of the present disclosure. Therefore, the scope of the present disclosure shall be subject to the scope of the claims.

## Claims

1. A processing method for cell residing, applied to a terminal device in a non-independent networking mode; **characterized in that** the processing method comprises:
obtaining a long term evolution, LTE, cell list in response to the terminal device being in a non-roaming state and entering an idle state;
selecting a first EUTRA-NR dual connection, ENDC, cell to reside on in response to the first ENDC cell existing in the LTE cell list; and
selecting a second ENDC cell to reside on in response to the first ENDC cell not existing in the LTE cell list;
wherein the first ENDC cell is an ENDC cell in the LTE cell list, and the first ENDC cell is in a neighbor list of a serving cell where the terminal device is located;
the second ENDC cell is an ENDC cell in the LTE cell list, and the second ENDC cell is not in the neighbor list of the serving cell where the terminal device is located.

2. The processing method according to claim 1, wherein the obtaining an LTE cell list comprises:
searching for available LTE cells by activating an LTE cell background search network function in response to the terminal device being in the non-roaming state and entering the idle state; and
forming the LTE cell list and network information corresponding to the LTE cell list by recording the searched available LTE cells.

3. The processing method according to claim 2, wherein the terminal device comprises a timing device, and the processing method further comprises:
activating the timing device in response to the terminal device being in a roaming state; and determining whether the terminal device is in the non-roaming state after the timing device exceeds a preset timing period; or
activating the timing device after completely executing the LTE cell background network search function; and activating the LTE cell background network search function again after the timing device exceeds the preset timing period.

4. The processing method according to claim 1, wherein the selecting a first ENDC cell to reside on in response to the first ENDC cell existing in the LTE cell list comprises:
in response to the first ENDC cell that exists in the LTE cell list comprising a plurality of first ENDC cells, obtaining a priority of each of the plurality of first ENDC cells; and
residing on a first target cell, wherein the first target cell is one of the plurality of first ENDC cells with a highest priority among the plurality of first ENDC cells.

5. The processing method according to claim 4, further comprising:
in response to the first target cell comprising a plurality of first target cells, selecting one of the plurality of first target cells with a greatest signal strength among the plurality of first target cells for residing.

6. The processing method according to claim 1, wherein the second ENDC cell comprises a plurality of second ENDC cells;
the selecting a second ENDC cell to reside on in response to the first ENDC cell not existing in the LTE cell list comprises:
obtaining a signal strength of each of the plurality of second ENDC cells; and
selecting one of the plurality of second ENDC cells with a greatest signal strength among the plurality of second ENDC cells for residing.

7. The processing method according to claim 1, further comprising:
controlling the terminal device to enter a 3GPP reselection process in response to the first ENDC cell and the second ENDC cell not existing in the LTE cell list.

8. A terminal device, configured to operate in a non-independent networking mode; wherein the terminal device comprises a processor configured to perform:
obtaining a long term evolution (LTE) cell list in response to the terminal device being in a non-roaming state and entering an idle state;
selecting a first EUTRA-NR dual connection (ENDC) cell to reside on in response to the first ENDC cell existing in the LTE cell list; and
selecting a second ENDC cell to reside on in response to the first ENDC cell not existing in the LTE cell list;
wherein the first ENDC cell is an ENDC cell in the LTE cell list, and the first ENDC cell is in a neighbor list of a serving cell where the terminal device is located;
the second ENDC cell is an ENDC cell in the LTE cell list, and the second ENDC cell is not in the neighbor list of the serving cell where the terminal device is located.

9. The terminal device according to claim 8, wherein the processor is further configured to perform:
searching for available LTE cells by activating an LTE cell background search network function; and
forming the LTE cell list and network information corresponding to the LTE cell list by recording the searched available LTE cells;
wherein the network information is configured to determine whether the first ENDC cell or the second ENDC cell exists in the LTE cell list.

10. The terminal device according to claim 8, wherein the processor is further configured to perform:
activating the timing device in response to the terminal device being in a roaming state; and determining whether the terminal device is in the non-roaming state after the timing device exceeds a preset timing period; or
activating the timing device after completely executing the LTE cell background network search function; and activating the LTE cell background network search function again after the timing device exceeds the preset timing period.

11. The terminal device according to claim 8, wherein the processor is further configured to perform:
in response to the first ENDC cell that exists in the LTE cell list comprising a plurality of first ENDC cells, obtaining a priority of each of the plurality of first ENDC cells; and
residing on a first target cell, wherein the first target cell is one of the plurality of first ENDC cells with a highest priority among the plurality of first ENDC cells.

12. The terminal device according to claim 11, wherein the processor is further configured to perform:
in response to the first target cell comprising a plurality of first target cells, selecting one of the plurality of first target cells with a greatest signal strength among the plurality of first target cells for residing.

13. The terminal device according to claim 8, wherein the processor is further configured to perform:
obtaining a signal strength of each of a plurality of the second ENDC cells; and
selecting one of the plurality of second ENDC cells with a greatest signal strength among the plurality of second ENDC cells for residing.

14. The terminal device according to claim 8, wherein the processor is further configured to perform:
controlling the terminal device to enter a 3GPP reselection process in response to the first ENDC cell and the second ENDC cell not existing in the LTE cell list.

15. A terminal device, comprising an application processor, a memory, and one or more programs; wherein the one or more programs are stored in the memory and configured to be executed by the application processor; the one or more programs comprise instructions for performing the method according to any one of claims 1 to 7.

16. A computer-readable storage medium, storing a computer program; wherein the computer program comprises a program instruction, the program instruction when executed by a processor causing the processor to perform the method according to any one of claims 1 to 7.
